# FASCICULE DE BREVET EUROPEEN

(11) **EP 3 724 142 B1**
(45) Date de publication et mention de la délivrance du brevet: **11.10.2023**
(21) Numéro de dépôt: 18833461.9
(22) Date de dépôt: 10.12.2018
(51) Int. Cl.: C03C 25/26, C03C 25/321, C03C 25/34, D04H 1/4209

(54) **PROCEDE DE FABRICATION DE LAINE MINERALE**
VERFAHREN ZUR HERSTELLUNG VON MINERALWOLLE
PROCESS FOR PRODUCING MINERAL WOOL

(30) Priorité: 13.12.2017 FR 1762029
(43) Date de publication de la demande: 21.10.2020
(73) Titulaire: SAINT-GOBAIN ISOVER, 92400 Courbevoie (FR)
(72) Inventeur: SAVONNET, Marie, 75018 Paris (FR); MARUANI, Victor, 69100 Villeurbanne (FR); FRAMERY, Eric, 69003 Lyon (FR); ANDRIOLETTI, Bruno, 01700 Miribel (FR)
(74) Mandataire: Saint-Gobain Recherche
(86) Numéro de dépôt international: PCT/FR2018/053165
(87) Numéro de publication internationale: WO 2019/115920

(56) Documents cités:
- CA-A1- 2 836 902
- FR-A1- 2 985 725

## Description

La présente demande concerne un procédé de fabrication de produits d'isolation thermique à base de laine minérale.

La fabrication de produits d'isolation à base de laine minérale comprend généralement une étape de fabrication des fibres de verre ou de roche par centrifugation interne ou externe ou par étirage, au moyen de courants gazeux, de verre fondu sortant d'une filière (procédé aéraulique).

On pulvérise sur les fibres encore chaudes, au moment de leur formation ou sur leur trajet entre le dispositif de centrifugation et le tapis de collecte des fibres, une composition d'encollage assez diluée et peu visqueuse, généralement au moyen d'une couronne de pulvérisation portant une série de buses équidistantes. L'évaporation de la phase aqueuse de la composition d'encollage, qui se produit pendant et immédiatement après l'étape d'encollage (pulvérisation), aboutit à la formation d'une couche de composition d'encollage relativement concentrée qui entoure les fibres et les rend collantes. Les fibres poisseuses, enduites de cette composition, sont ensuite rassemblées sur un tapis convoyeur en un matelas de fibres. Ce matelas conserve son caractère poisseux au moins jusqu'à l'entrée dans l'étuve où la composition d'encollage subit une réaction de thermodurcissement à des températures d'environ 200 °C. Le produit final sortant de l'étuve est constitué de fibres minérales maintenues ensemble par un liant organique thermodurci, non collant.

Les résines phénoliques utilisées pendant plusieurs dizaines d'années en tant que liants pour fibres minérales, en particulier pour la laine de verre ou de roche, sont remplacées de plus en plus par des réactifs issus de sources renouvelables et qui n'émettent pas, ou très peu, de formaldéhyde, composé considéré comme pouvant nuire à la santé humaine.

De nombreux liants à base de sucres ont déjà été proposés.

Ainsi, la demande internationale WO 2007/014236 propose des compositions de liant pour laines minérales à base de sucres réducteurs et de polycarboxylates d'ammonium (= sels d'acides polycarboxyliques et d'amines primaires ou d'amines secondaires ou d'ammoniaque) qui, par un mécanisme réactionnel similaire à la réaction de Maillard, aboutissent à la formation de liants à base de composés complexes appelés mélanoïdines. Les compositions aqueuses de liant présentent un pH alcalin compris entre 7 et 10.

La demande WO 2011/019590 propose l'utilisation d'une composition aqueuse contenant au moins un sel d'amine d'un acide minéral, y compris les sels d'ammonium d'acide minéral, et d'au moins un aldéhyde ou une cétone, tel qu'un sucre réducteur, en tant que liant pour des fibres minérales.

La Demanderesse a montré que les sucres non réducteurs, tels que le saccharose, pouvaient également servir à la préparation de compositions de liant biosourcées.

La demande US 2016/264454 divulgue ainsi des compositions de liant à base de sucre non-réducteur, notamment de saccharose, et de sels d'ammonium d'acides inorganiques, tels que les sulfates, phosphates, nitrates et carbonates d'ammonium. Le pH des compositions de liant décrites dans cette demande est compris entre 6 et 9, de préférence entre 7 et 8. CA-2836902 se rapporte à une composition d'encollage exempte de formaldéhyde, pour des produits à base de fibres, notamment minérales telles que des fibres de verre ou de roche, qui comprend - au moins un sucre non réducteur, - au moins un catalyseur de déshydratation du sucre non réducteur, - au moins une aminé, - et au moins un composé à insaturation(s) éthylénique(s) activée(s). FR-2985725 (A1) se rapporte à une composition d'encollage exempte de formaldéhyde, pour des produits à base de fibres, notamment minérales telles que des fibres de verre ou de roche, qui comprend - au moins un acide humique et/ou un acide fulvique ou un sel de ces acides, - au moins un saccharide, et - au moins un sel d'ammonium d'acide inorganique. Elle a également pour objet les produits ainsi obtenus, notamment des voiles, des mats, des feutres, des tissus enduits ou imprégnés et des isolants thermiques et/ou acoustiques à base de laine minérale, notamment de verre ou de roche, et leur procédé de fabrication.

La Demanderesse, dans le cadre de ses études visant à mieux comprendre le ou les mécanismes des réactions de sucres non-réducteurs avec des amines, y compris l'ammoniaque (NH₄OH), a constaté avec surprise que, contrairement à ce qu'enseigne l'état de la technique, il est avantageux de pulvériser sur les fibres minérales des compositions de liant qui présentent un pH modérément acide, de l'ordre de 5 à 6. Elle a observé en outre que la réaction entre les sucres et les amines, y compris l'ion ammonium NH₄⁺, aboutissait à une acidification importante du milieu réactionnel et qu'il était important de ne pas empêcher cette acidification du milieu réactionnel par la présence d'un agent tampon, tel qu'un sel d'acide carboxylique, susceptible de tamponner le milieu réactionnel à une valeur comprise entre environ 2,5 et 7. Autrement dit, pour obtenir des produits thermodurcis avec de bonnes propriétés mécaniques, il était important que l'amine ou l'ammoniaque soit associé, dans le milieu réactionnel, à un acide fort ou à un acide faible ayant un pKa inférieur à 2,2, et que ce milieu réactionnel soit en outre exempt d'acide faible ayant un pKa compris entre 2,5 et 6,9.

Enfin, la Demanderesse a constaté que les amines secondaires et tertiaires ne permettaient pas l'obtention d'un produit final présentant de bonnes propriétés mécaniques et que seul l'ammonium et les amines primaires réagissaient avec les sucres non réducteurs en formant un liant durci de bonne qualité.

La présente invention a par conséquent pour objet un procédé de fabrication de produits isolants à base de fibres minérales, en particulier de laine minérale, comprenant
- la mise à disposition d'une première composition de liant contenant,
   (a) de 50 % à 85 % en poids d'eau, de préférence de 70 à 82 % d'eau
   (b) de 10 % à 45 % en poids, de préférence 15 à 35 % en poids d'un composant osidique contenant du saccharose,
   (c) de 3 % à 15 % en poids, de préférence de 5 à 12 % en poids, d'un ou plusieurs sels d'ammonium (NH₃/NH₄⁺) ou d'amine primaire (R-NH₂/R-NH₃⁺) d'un acide,
- la préparation d'une deuxième composition de liant comprenant la dilution de la première composition aqueuse de liant avec de l'eau jusqu'à une teneur en matières solides comprise entre 3 et 7 % en poids, de préférence entre 4 et 6 % en poids,
- l'application de la deuxième composition de liant sur des fibres minérales,
- la formation d'un assemblage de fibres minérales enduites de la deuxième composition de liant, et
- le chauffage de l'assemblage de fibres minérales enduites de manière à former un ensemble de fibres minérales liées par un liant insoluble,
ledit procédé étant caractérisé par le fait que la première composition aqueuse de liant a un pH inférieur à 5,5, par le fait que le sel d'ammonium ou d'amine primaire est un sel d'acide fort ou un sel d'un acide présentant un pKa inférieur ou égal à 2,2, et par le fait que les première et deuxième compositions de liant sont exemptes de sels d'acides faibles ayant au moins un pKa compris entre 2,5 et 6,9.

Le pH modérément acide, compris entre 5 et 6, de la composition de liant au moment de la pulvérisation sur les fibres minérales permet de préserver les parties métalliques des installations contre la corrosion et d'améliorer la qualité de l'atmosphère en amont de l'étuve. Dans le procédé selon l'invention l'acidification du milieu réactionnel, indispensable à l'obtention de produits présentant de bonnes propriétés mécaniques, ne se produit qu'à l'intérieur de l'étuve au cours de la réaction de réticulation, c'est-à-dire dans une atmosphère confinée qui est plus facilement soutirée, neutralisée et nettoyée qu'en milieu ouvert en amont de l'étuve.

Dans la présente demande le terme « composition d'encollage » et « composition de liant » sont utilisées de manière parfaitement équivalente. On distingue par contre une première composition de liant, ou première composition d'encollage, qui présente une teneur en matières sèches considérablement plus élevée que la deuxième composition de liant, ou deuxième composition d'encollage, beaucoup plus diluée que la première.

La teneur en matières solides (ou matières sèches) de la première composition de liant est de préférence comprise entre 20 % et 60 % en poids, en particulier entre 25 % et 55 % en poids. Cette composition de liant concentrée est destinée au stockage pendant des durées prolongées, pouvant aller par exemple de quelques jours à plusieurs semaines. C'est également celle qui pourra être fabriquée en un endroit donné, puis être commercialisée et/ou transportée vers un autre endroit en vue de sa dilution et application sur les fibres minérales.

La teneur en matières solides (ou matières sèches) de la deuxième composition de liant est comprise entre 3 et 7 % en poids, de préférence entre 4 et 6 % en poids.

La préparation de la deuxième composition de liant par dilution de la première composition de liant se fait de préférence par ajout d'eau uniquement, et notamment sans ajout de solvant organique ni d'agent susceptible de modifier ou de tamponner le pH de la composition. L'étape de préparation de la deuxième composition aqueuse de liant par dilution de la première composition de liant ne comprend donc de préférence pas l'ajout d'une base. Du fait de l'absence d'ajout d'une base, la deuxième composition aqueuse de liant a un pH peu différent de celui de la première composition aqueuse de liant. La dilution ou l'addition de certains additifs courants peut bien entendu augmenter légèrement le pH de composition aqueuse d'encollage, mais on veillera alors, de préférence par addition d'un acide fort, à ce que le pH de la deuxième composition aqueuse de liant soit inférieur à 6.

Les première et deuxième compositions de liant de la présente invention contiennent donc deux ingrédients essentiels qui réagissent l'un avec l'autre, à savoir
- un composant osidique contenant du saccharose et
- un sel d'ammonium ou d'amine primaire.

Ces deux ingrédients essentiels représentent avantageusement au moins 80 % en poids, de préférence au moins 90 % en poids des matières sèches des première et deuxième compositions de liant de l'invention.

D'autres ingrédients, minoritaires en quantités, également appelés additifs, peuvent être présents. Il s'agit d'additifs connus, utilisés couramment dans le domaine des laines minérales. Ces additifs sont choisis en particulier parmi les agents de couplage, les silicones et les additifs anti-poussières.

Il est largement connu et très courant d'utiliser des silanes fonctionnels en tant qu'agents de couplage pour améliorer l'adhésion de matériaux organiques sur des surfaces minérales telles que le verre. Un silane fonctionnel comporte généralement au moins une, de préférence deux ou trois fonctions alcoxysilyle hydrolysables, capables de réagir avec les groupes silanol à la surface du verre, et au moins une fonction réactive (oxirane, amine) portée par un groupe organique non hydrolysable, lié à l'atome de silicium par une liaison Si-C. Cette fonction organique est généralement choisie de manière à pouvoir réagir avec la phase organique.

Pour obtenir un effet de couplage liant-verre satisfaisant, il est généralement suffisant d'ajouter moins de 1 % en poids (de matières sèches) d'agent de couplage à la composition d'encollage.

Les agents de couplage les plus utilisés sont les aminosilanes. Ils sont relativement meilleur marché que les époxysilanes et présentent à pH neutre une stabilité chimique qui permet de préparer les compositions d'encollage longtemps par avance.

Les silicones, généralement des polyorganosiloxanes, sont utilisées pour augmenter le caractère hydrophobe du produit fini et d'en améliorer le vieillissement en milieu humide. On peut utiliser des silicones fonctionnalisées comportant des groupes capables de réagir avec un ou plusieurs réactifs de la composition d'encollage, notamment avec le composant osidique. Les silicones lorsqu'elles sont présentes, représentent généralement de 0,05 à 0,2 % en poids des matières sèches de la composition d'encollage.

Enfin, les additifs anti-poussières sont généralement des émulsions aqueuses d'huile minérale stabilisées avec des agents tensioactifs et/ou des polymères épaississants de la phase aqueuse. Ils sont typiquement utilisés en des quantités comprises entre 0,1 et 3,0 % en poids, rapporté au poids des matières sèches des compositions d'encollage.

Les additifs précités sont de préférence ajoutés à la première composition aqueuse de liant pendant l'étape de préparation de la deuxième composition aqueuse de liant par dilution avec de l'eau, dans certains cas immédiatement avant l'application de la deuxième composition sur les fibres minérales.

Le composant osidique peut être constitué de saccharose, c'est-à-dire contenir uniquement du saccharose, ou bien il peut contenir une certaine fraction d'autres osides dimères ou oligomères, solubles dans la composition d'encollage. On peut citer à titre d'exemples de tels osides, différents du saccharose, le maltose, le lactose, le maltotriose, le tréhalose, les isotréhaloses, les isosaccharoses, le raffinose, l'erlose, l'umbelliférose, le gentianose, le mélézitose, le stachyose, le verbascose, le gentiobiose, le cellobiose et les dextrines hydrosolubles résultant de la l'hydrolyse chimique ou enzymatique de l'amidon et ayant de préférence un équivalent dextrose (DE) compris entre 10 et 80, en particulier entre 15 et 70.

Le saccharose représente de préférence au moins 50 % en poids, en particulier au moins 80 % en poids, idéalement au moins 95 % en poids du composant osidique.

Les sels d'ammonium ou d'amines primaires utilisés dans la présente invention sont des sels d'acides forts ou des sels d'acides faibles ayant un pKa inférieur à 2,2. Dans toute la demande pKa = -log₁₀Ka, Ka étant la constante de dissociation de l'acide déterminée à 25 °C.

Les acides forts sont des acides qui, en solution dans l'eau, se dissocient totalement en proton et base faible conjuguée. Leur pKa présente donc une valeur négative.

On peut citer à titre d'exemples de ces acides forts les acides halogénhydriques, à savoir l'acide chlorhydrique, l'acide iodhydrique et l'acide bromhydrique, l'acide sulfurique (H₂SO₄), l'acide nitrique (HNO₃), l'acide chlorique (HClO₃), l'acide perchlorique (HClO₄), l'acide manganique (H₂MnO₄), l'acide permanganique (HMnO₄), l'acide trifluoroacétique, et les superacides englobant l'acide fluoroantimonique (HF.SbF₅), l'acide magique (HSO₃F.SbF₅), l'acide trifluorométhanesulfonique (HSO₃CF₃), l'acide fluorosulfurique (HSO₃F) et l'acide disulfurique (H₂S₂O₇). On peut bien entendu utiliser un mélange de deux ou plusieurs de ces acides forts.

On peut également utiliser des sels d'acides faibles ayant une constante de dissociation très élevée, c'est-à-dire un pKa très bas, inférieur à 2,2, tels que les sels d'acide phosphorique.

On utilisera de préférence les sels d'acide sulfurique (sulfates et hydrogénosulfates), d'acide nitrique (nitrates) et d'acide phosphorique (dihydrogénophosphates).

Comme expliqué en introduction, la Demanderesse a montré que, pour obtenir des produits finis à base de laine minérale présentant de bonnes propriétés mécaniques, il était important que le pH du milieu réactionnel puisse baisser, au cours de la réaction de réticulation, jusqu'à des valeurs très faibles (proches de 1). Les compositions d'encollage ne doivent donc pas contenir des quantités substantielles d'acides faibles ayant des pKa supérieur à 2,5, notamment compris entre 2,5 et 6,9. Cette catégorie d'acides englobe en particulier la plupart des acides carboxyliques.

Bien entendu on ne pourra pas exclure la dissolution de gaz carbonique dans les compositions aqueuses d'encollage aboutissant à la présence de faibles quantités d'acide carbonique (pKa 6,37 et 10,32). L'effet tampon de cet acide est toutefois négligeable du fait de sa faible concentration et du fait que le pH de la première composition de liant (inférieur à 5,5) est significativement inférieur au pKa de l'acide carbonique.

Les sels d'acides utilisables dans la présente invention sont des sels d'ammonium de formule Aⁿ⁻(NH₄⁺)ₙ ou des sels d'amines primaires de formule Aⁿ⁻(RNH₃⁺)ₙ où Aⁿ⁻ représente l'anion de valence n de l'acide et RNH₃⁺ représente la forme protonée de l'amine primaire.

L'amine primaire, sous sa forme non protonée, répond à la formule (I) suivante :

(I) R₁-B-NH₂

dans laquelle
R₁ est égal à -H, -OH, -NHR₂ ou -NR₂, où R₂ est un atome d'hydrogène ou un groupement hydroxyalkyle en C₁ - C₅, de préférence un groupe hydroxyéthyle,
B représente
   - un groupement alkylène, arylalkylène, arylène ou alkylarylène,
   - un groupement -CO- ou
   - un groupement de formule : 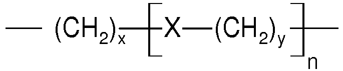
dans laquelle
X représente un groupe -O- ou -NR₃-, où R est un groupe -H, -(CH₂)_{z}-NH₂ ou un groupement bivalent -(CH₂)ₜ- qui forme avec un atome d'azote voisin un cycle à 6 atomes,
x, y, z et t varient de 1 à 5, de préférence x = y = z = t = 2
n est égal à 1, 2, 3 ou 4.

A titre d'exemples de telles amines, on peut citer la monoéthanolamine, l'hexaméthylènediamine (HMDA), l'éthylènediamine, l'urée, la diéthylènetriamine (DETA), la triéthylènetétramine (TETA), la tétraéthylènepentamine (TEPA), la pentaéthylènehexamine (PEHA), l'aminoéthyltriéthylènetetramine (AETETA), la N"-(aminoéthyl)tétraéthylènepentamine et la N'-(aminoéthyl)-tétraéthylène-pentamine (AETEPA), la bis-(pipérazine)éthylène (BISPIP), l'aminoéthylpipérazineéthyléthylènediamine (AEPEEDA), la pipérazinéthyldiéthylènetriamine (PEDETA), l'aminoéthylpipérazinéthyldiéthylènetriamine (AEPEDETA), la pipérazinéthyltriéthylènetétramine (PETETA), la tris-(aminoéthyl)aminoéthylpipérazine (TRISAEAEP), la pipérazinéthylaminoéthyl-diéthylènetriamine (PEAEDETA), les polyétheramines (Jeffamines^{®}) et la tris-2-aminoéthylamine.

On utilisera de préférence une diamine primaire telle que l'hexaméthylènediamine et les polyétheramines (Jeffamine^{®}).

Les essais et analyses faites par la Demanderesse pour mieux comprendre les mécanismes réactionnels à la base de la formation du liant ont montré que l'on retrouvait au moins une partie de l'azote de l'ion ammonium ou de l'amine primaire dans le liant durci, et ceci sous une forme non lixiviable. Autrement dit, le réactif azoté s'intègre dans le réseau tridimensionnel constituant le liant organique durci.

En dépit de l'importance du sel d'ammonium ou d'amine primaire pour l'obtention d'un liant durci de bonne qualité, ce composant est de préférence minoritaire par rapport au composant osidique. La fraction pondérale du composant osidique de la composition d'encollage est donc de préférence supérieure à celle du sel d'ammonium/amine primaire d'un acide fort.

Dans un mode de réalisation avantageux de la présente invention le rapport en poids du composant osidique au sel d'ammonium ou d'amine primaire est compris entre 60/40 et 95/5, de préférence entre 65/35 et 90/10, idéalement entre 70/30 et 88/12.

L'étape d'application de la deuxième composition aqueuse de liant sur les fibres minérales, l'étape de formation d'un assemblage de fibres minérales collantes (enduites de la composition de liant non durci), et l'étape de chauffage de l'assemblage de fibres minérales afin de réticuler et durcir le film collant entourant les fibres minérales ne présentent pas de caractéristiques techniques particulières qui ne soient pas déjà connues dans l'état de la technique.

La cuisson du liant se fait généralement dans une étuve ventilée et thermostatée à une température telle que la température au coeur du produit soit comprise entre 200 et 230 °C, de préférence entre 210 °C et 220 °C. La durée de séjour du matelas de fibres minérales dans cette zone thermostatée est de préférence comprise entre 5 et 20 minutes, de préférence entre 7 et 15 minutes.

Les exemples qui suivent permettent d'illustrer l'invention sans toutefois la limiter.

Dans ces exemples, on mesure :
- la résistance en traction, selon la norme ASTM C 686-71T, sur un échantillon découpé par estampage dans le produit isolant. L'échantillon a la forme d'un tore de 122 mm de longueur, 46 mm de largeur, un rayon de courbure de la découpe du bord extérieur égal à 38 mm et un rayon de courbure de la découpe du bord intérieur égal à 12,5 mm.

L'échantillon est disposé entre deux mandrins cylindriques d'une machine d'essais dont l'un est mobile et se déplace à vitesse constante. On mesure la force (F) en Newton au moment de la rupture de l'échantillon et on calcule la résistance en traction RT définie par le rapport de la force de rupture F à la masse de l'échantillon (en Newton/gramme).

La résistance en traction est mesurée immédiatement après la fabrication (RT).

### Exemples

On prépare des compositions concentrées de liant comprenant les ingrédients figurant dans le tableau 1, en des quantités exprimées en parts pondérales de matières sèches. Les compositions concentrées ont une teneur en matières sèches d'environ 25 %, c'est-à-dire elles contiennent environ 75 % d'eau. Le pH initial indiqué au Tableau 1 est le pH de ces compositions concentrées.

Les compositions de liant sont préparées en introduisant les constituants dans un récipient contenant de l'eau, sous une agitation vigoureuse jusqu'à formation d'une solution homogène. Le pH initial indiqué au Tableau 1 est le pH de cette solution concentrée homogène. Ces compositions concentrées sont ensuite diluées avec de l'eau jusqu'à une teneur en matières sèches de 5 % en poids. On y ajoute en outre 8 parts d'une émulsion d'huile minérale (additif anti-poussière), 0,5 part d'aminosilane et 0,1 part d'une silicone. On vérifie que le pH des solutions diluées est inférieur ou égal à 6,0, et si besoin on acidifie par ajout d'un acide fort. Ces compositions d'encollage diluées sont utilisées pour former des produits d'isolation à base de laine de verre.

On fabrique de la laine de verre par la technique de la centrifugation interne dans laquelle la composition de verre fondu est transformée en fibres au moyen d'un outil dénommé assiette de centrifugation, comprenant un panier formant la chambre de réception de la composition de verre fondu et une bande périphérique percée d'une multitude d'orifices : l'assiette tourne autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage. La finesse des fibres de verre, mesurée par la valeur de leur micronaire dans les conditions décrites dans la demande de brevet FR 2 840071, est égale à 15,8 l/min. Il existe une relation de correspondance entre la valeur micronaire et le diamètre moyen des fibres.

Une couronne de pulvérisation comportant des buses équidistantes est disposée au-dessous de l'assiette de fibrage de façon à répartir régulièrement la composition d'encollage sur les fibres de laine de verre venant d'être formées.

La laine minérale ainsi encollée est collectée sur un convoyeur à bande ayant une largeur de 2,40 m, équipé de caissons d'aspiration internes qui retiennent la laine minérale sous forme d'un feutre ou d'une nappe à la surface du convoyeur. Le convoyeur passe ensuite dans une étuve où les réactifs de la composition de liant (saccharose + sel d'ammonium/d'amine primaire) polymérisent pour former un liant durci non collant. Le produit isolant obtenu présente une masse volumique égale à 27,0 kg/m³, une épaisseur d'environ 80 mm immédiatement après la fabrication et une perte au feu comprise entre environ 3 et 5,0 %.

Le tableau 1 ci-après montre
- la nature chimique et la teneur massique des ingrédients formant chaque composition d'encollage (A, B, C, D, E),
- le pH initial de la composition aqueuse d'encollage concentrée ayant une teneur en matières sèches d'environ 25 % en poids,
- la perte au feu du produit final, exprimée en % en poids
- la résistance en traction (en N/g) du produit final, déterminée de la manière décrite ci-dessus.

**Tableau 1**

| Compositio n | Ingrédients (parties en poids) | pH initial | pKa de l'acide | Perte au feu (%) | Résistance en traction (N/g) |
|---|---|---|---|---|---|
| A* | Saccharose/sulfate d'ammonium (85/15) | 4,7 | 1,99 | 4,69 | 4,08 |
| B* | Saccharose/HMDA/H₃PO₄ (67,9/11,9/20,2) | 5,3 | 2,12 | 3,64 | 3,98 |
| C | Saccharose/HMDA/H₃PO₄ (75,5/13,3/11,2) | 9,1 | 2,12 | 3,93 | 3,16 |
| D | Saccharose/HMDA/H₃PO₄ (80/14/6) | 11,6 | 2,12 | 3,64 | 2,77 |
| E | Saccharose/TPA/H3PO4 (79,9/14,1/6) | 2,1 | 2,12 | 3,07 | 1,70 |
| F | Saccharose/acétate d'ammonium (85/15) | 8 | 4,76 | Arrêt de la ligne | Arrêt de la ligne |

| | | | | | |
|---|---|---|---|---|---|
| *Compositions selon l'invention ; HDMA = hexaméthylène-diamine ; TPA = tripentylamine | | | | | |

Seules les compositions A et B sont des compositions selon l'invention, à savoir des compositions aqueuses d'encollage qui contiennent du saccharose et un sel d'ammonium (composition A) ou un sel d'amine primaire (composition B) d'un acide fort (composition A) ou d'un acide faible ayant un pKa inférieur à 2,2, et qui présentent un pH initial inférieur à 5,5.

Les compositions C et D sont des compositions comparatives car leur pH initial est trop élevée (supérieur à 5,5).

La composition E est une composition comparative car l'amine n'est pas une amine primaire, mais une amine tertiaire.

La composition F est une composition comparative car l'acide acétique est un acide faible ayant un pKa trop élevée (4,76). L'arrêt de la ligne de production de laine minérale a été provoqué par les propriétés mécaniques très médiocres du panneau formé.

## Revendications

1. Procédé de fabrication de produits isolants à base de fibres minérales, en particulier de laine minérale, comprenant
- la mise à disposition d'une première composition de liant contenant,
(a) de 50 % à 85 % en poids d'eau, de préférence de 70 à 82 % d'eau
(b) de 10 % à 45 % en poids, de préférence 15 à 35 % en poids d'un composant osidique contenant du saccharose,
(c) de 3 % à 15 % en poids, de préférence de 5 à 12 % en poids, d'un ou plusieurs sels d'ammonium ou d'amine primaire d'un acide,
- la préparation d'une deuxième composition de liant comprenant la dilution de la première composition aqueuse de liant avec de l'eau jusqu'à une teneur en matières solides comprise entre 3 et 7 % en poids, de préférence entre 4 et 6 % en poids,
- l'application de la deuxième composition de liant sur des fibres minérales,
- la formation d'un assemblage de fibres minérales enduites de la deuxième composition de liant, et
- le chauffage de l'assemblage de fibres minérales enduites de manière à former un ensemble de fibres minérales liées par un liant insoluble,
ledit procédé étant **caractérisé par le fait que** la première composition aqueuse de liant a un pH inférieur à 5,5, **par le fait que** le sel d'ammonium ou d'amine primaire est un sel d'acide fort ou un sel d'un acide présentant un pKa inférieur ou égal à 2,2, et **par le fait que** les première et deuxième compositions de liant sont exemptes de sels d'acides faibles ayant au moins un pKa compris entre 2,5 et 6,9.

2. Procédé selon la revendication 1, **caractérisé par le fait que** le composant osidique contient au moins 50 % en poids, de préférence au moins 80 % en poids, idéalement au moins 95 % en poids de saccharose.

3. Procédé selon la revendication 1 ou 2, **caractérisé par le fait que** le rapport en poids du composant osidique au sel d'ammonium ou d'amine primaire est compris entre 60/40 et 95/5, de préférence entre 65/35 et 90/10, idéalement entre 70/30 et 88/12.

4. Procédé selon l'une quelconque des revendications précédentes, **caractérisé par le fait que** l'amine primaire est une diamine primaire.

5. Procédé selon l'une quelconque des revendications précédentes, **caractérisé par le fait que** l'étape de préparation de la deuxième composition aqueuse de liant comprend en outre l'addition d'un ou plusieurs additifs choisis de préférence parmi les agents de couplage, les silicones et les additifs anti-poussières.

6. Procédé selon l'une quelconque des revendications précédentes, **caractérisé par le fait que** l'étape de préparation de la deuxième composition aqueuse de liant ne comprend pas l'ajout d'une base.

7. Procédé selon l'une quelconque des revendications précédentes, **caractérisé par le fait que** la deuxième composition de liant présente un pH inférieur à 6.

## Patentansprüche

1. Verfahren zum Herstellen von Dämmprodukten auf Basis von Mineralfasern, insbesondere von Mineralwolle, umfassend
- Bereitstellen einer ersten Bindemittelzusammensetzung, enthaltend
(a) zu 50 Gew.- % bis 85 Gew.- % Wasser, vorzugsweise zu 70 bis 82 Gew.-% Wasser
(b) zu 10 Gew.- % bis 45 Gew.-%, vorzugsweise zu 15 bis 35 Gew.-%, eine Saccharose enthaltende osidische Komponente,
(c) zu 3 Gew.-% bis 15 Gew.-%, vorzugsweise zu 5 bis 12 Gew.-%, ein oder mehrere Ammoniumsalze oder primäre Aminsalze einer Säure,
- Herstellen einer zweiten Bindemittelzusammensetzung, umfassend das Verdünnen der ersten wässrigen Bindemittelzusammensetzung mit Wasser auf einen Feststoffgehalt zwischen 3 und 7 Gew.-%, vorzugsweise zwischen 4 und 6 Gew.-%,
- Aufbringen der zweiten Bindemittelzusammensetzung auf Mineralfasern,
- Bilden eines Verbunds von Mineralfasern, die mit der zweiten Bindemittelzusammensetzung beschichtet sind, und
- Erwärmen des Verbunds beschichteter Mineralfasern, um eine Gesamtheit von Mineralfasern zu bilden, die durch ein unlösliches Bindemittel gebunden sind,
wobei das Verfahren **dadurch gekennzeichnet ist, dass** die erste wässrige Bindemittelzusammensetzung einen pH-Wert von weniger als 5,5 aufweist, dass das Ammonium- oder primäre Aminsalz ein Salz einer starken Säure oder ein Salz einer Säure mit einem pKa-Wert von weniger als oder gleich 2,2 ist und dass die erste und die zweite Bindemittelzusammensetzung frei von Salzen schwacher Säuren mit mindestens einem pKa-Wert zwischen 2,5 und 6,9 sind.

2. Verfahren nach Anspruch 1, **dadurch gekennzeichnet, dass** die osidische Komponente zu mindestens 50 Gew.-%, vorzugsweise zu mindestens 80 Gew.-%, idealerweise zu mindestens 95 Gew.-%, Saccharose enthält.

3. Verfahren nach Anspruch 1 oder 2, **dadurch gekennzeichnet, dass** das Gewichtsverhältnis der osidischen Komponente zu dem Ammonium- oder primären Aminsalz zwischen 60/40 und 95/5, vorzugsweise zwischen 65/35 und 90/10, idealerweise zwischen 70/30 und 88/12, liegt.

4. Verfahren nach einem der vorstehenden Ansprüche,
**dadurch gekennzeichnet, dass** das primäre Amin ein primäres Diamin ist.

5. Verfahren nach einem der vorstehenden Ansprüche,
**dadurch gekennzeichnet, dass** der Schritt des Herstellens der zweiten wässrigen Bindemittelzusammensetzung ferner die Zugabe eines oder mehrerer Additive umfasst, die vorzugsweise aus Kopplungsmitteln, Silikonen und Staubschutzadditiven ausgewählt sind.

6. Verfahren nach einem der vorstehenden Ansprüche,
**dadurch gekennzeichnet, dass** der Schritt des Herstellens der zweiten wässrigen Bindemittelzusammensetzung nicht die Zugabe einer Base umfasst.

7. Verfahren nach einem der vorstehenden Ansprüche,
**dadurch gekennzeichnet, dass** die zweite Bindemittelzusammensetzung einen pH-Wert von weniger als 6 aufweist.

## Claims

1. A process for producing insulating products based on mineral fibers, in particular on mineral wool, comprising
- providing a first binder composition containing
(a) from 50% to 85% by weight of water, preferably from 70 to 82% of water
(b) from 10% to 45% by weight, preferably 15 to 35% by weight of a saccharide component containing sucrose,
(c) from 3% to 15% by weight, preferably from 5 to 12% by weight of one or more ammonium salts or primary amine salts of an acid,
- preparing a second binder composition comprising the dilution of the first aqueous binder composition with water to a solids content of between 3 and 7% by weight, preferably between 4 and 6% by weight,
- applying the second binder composition to mineral fibers,
- forming an assembly of mineral fibers coated with the second binder composition, and
- heating the assembly of coated mineral fibers so as to form an assembly of mineral fibers bound by an insoluble binder,
said process being **characterized in that** the first aqueous binder composition has a pH of less than 5.5, **in that** the ammonium salt or primary amine salt is a salt of strong acid or a salt of an acid having a pKa of less than or equal to 2.2, and **in that** the first and second binder compositions are devoid of salts of weak acids having at least a pKa of between 2.5 and 6.9.

2. The process as claimed in claim 1, **characterized in that** the saccharide component contains at least 50% by weight, preferably at least 80% by weight, ideally at least 95% by weight of sucrose.

3. The process as claimed in claim 1 or 2, **characterized in that** the weight ratio of the saccharide component to the ammonium salt or primary amine salt is between 60/40 and 95/5, preferably between 65/35 and 90/10, ideally between 70/30 and 88/12.

4. The process as claimed in any one of the preceding claims, **characterized in that** the primary amine is a primary diamine.

5. The process as claimed in any one of the preceding claims, **characterized in that** the step of preparing the second aqueous binder composition also comprises the addition of one or more additives preferably chosen from coupling agents, silicones and dust-preventing additives.

6. The process as claimed in any one of the preceding claims, **characterized in that** the step of preparing the second aqueous binder composition does not comprise the addition of a base.

7. The process as claimed in any one of the preceding claims, **characterized in that** the second binder composition has a pH of less than 6.
